# EUROPEAN PATENT SPECIFICATION

(11) **EP 1 719 668 B1**
(45) Date of publication and mention of the grant of the patent: **16.07.2008**
(21) Application number: 05009691.6
(22) Date of filing: 03.05.2005
(51) Int. Cl.: B60R 21/20, G01N 21/00

(54) **Method for quality inspection of an automative interior design part having a weakening line**
Verfahren zur Qualitätskontrolle eines Kraftfahrzeug-Innenteils mit einer Aufreisslinie
Procédé pour l'inspection de la qualité d'une pièce d'habillage avec une ligne de faible résistance

(43) Date of publication of application: 08.11.2006
(73) Proprietor: Faurecia Innenraum Systeme GmbH, 76767 Hagenbach (DE)
(72) Inventor: Pena I Suari, Josep, 08400-Granollers (ES)
(74) Representative: Richardt, Markus Albert

(56) References cited:
- EP-A- 1 162 054
- DE-A1- 4 207 630
- DE-U1- 20 008 392
- US-A1- 2001 010 423

## Description

### Field of the invention

The present invention relates to the field of automotive interior design parts, and more particularly to quality inspection of such automotive interior design parts.

### Background and prior art

Airbag safety systems have come into widespread use in automotive vehicles and trucks. Such airbag safety systems comprise an inflatable cushion, commonly referred to as an 'airbag' which is stored folded in a storage receptacle and then very rapidly inflated, as with gas from a pyrotechnic gas generator, when a collision of the vehicle is detected by sensors. The airbag is thereby deployed in a position to absorb the impact of the driver or a passenger.

The storage receptacle is typically mounted behind an interior trim piece, such as a steering wheel cover in the case of the driver's side airbag, or a section of the instrument panel, in the case of the passenger's airbag, or into the pillar covers (for lateral air-bags), or similar.

One or more airbag deployment doors normally overlie the airbag receptacle and are forced open when the airbag is inflated to allow deployment of the airbag through the opening created by the door panel movement.

In 'invisible seam' or 'seamless' airbag installations the deployment door pattern is totally invisible to a person seated in the vehicle passenger compartment. In such 'seamless' airbag installations the airbag deployment opening is defined by a pre-weakening line.

### Several techniques for pre-weakening have been proposed in the prior art:

US Patent number 5,082,310 describes a partial cutting procedure which is intended to enable control over the depth of cuts into a sheet of pliant plastic material such as vinyl skin. However, a purely mechanical cutting operation has many inherent accuracy limitations and is slow to execute.

US Patent number 5,744,776 discloses a laser pre-weakening technique. A laser beam impinges the inside surface of the cover to form a groove scoring or spaced perforations to form a pre-weakening pattern.

Laser pre-weakening can be performed by moving the part to be pre-weakened, e.g. a car instrument panel, by a robot in front of the laser beam. The laser produces micro-holes from the reverse side of the instrument panel. A control method prevents the laser from cutting fully through the material. Thus, a succession of blind holes can be produced. The line of micro-perforation holes weakens the material / compound material in such a way that it breaks open along this line when the airbag deploys. The type of individual micro-perforation holes, their pitch and the contour of the line of perforated holes can be varied and can thus be matched to the material of the scored part.

Other pre-weakening techniques, such as by means of cold knives, hot knives or ultrasonic knives have also been suggested. For example, EP 1459943 shows a cutting tool for controlled weakening of release panels concealing airbags. The cutting head carries a blade and is moved by a guidance unit. A sensor is connected to them for measurement of the clearance between the cutting tip and a cutting counter-plate.

DE10128745 shows a method for producing a perforation line by forming numerous perforation holes. The holes have a longitudinal slit geometry and are arranged longitudinally. The laser power is controlled by measuring the remaining wall thickness.

DE4344523 A1 shows a cutting device for forming a pre-weakening line. The depth of the cut is measured by means of an optical sensor during the cutting operation in order to control the cutting depth.

EP 1 162 054 A1 shows a method for measuring and recording a residual wall thickness in car skin. A laser displacement sensor and a CCD camera is used for detecting the residual thickness.

DE 42 07 630 A1 shows a stereo microscope for measuring the dimensions of objects using a CCD camera.

US 2001 / 001 04 23 A1 shows a pre-weakened automotive interior trim piece for covering an airbag installation in an automotive vehicle.

DE 200 08 392 U1 that is the point of departure of the present invention discloses a holder for samples cut from an instrument panel in order to inspect the pre-weakening of a slush skin.

The present invention aims to provide for a method of quality inspection of a pre-weakened automotive interior design part.

### Summary of the invention

The present invention provides a method of quality inspection in accordance with the features of claim 1.

Further, the present invention enables fully automatic measurements. This is quicker than manual measurements and much more reliable.

Further, the present invention can be used irrespective of the material of the product to be controlled.

Even though the pre-weakening process is usually performed in a controlled manner by sensing the depth of the pre-weakening or the depth of remaining material, there is still a need to inspect the quality of the automotive interior design parts that are produced by means of such processes. This is due to the fact that process control is not error free and also due to the fact that there can be numerous process and material inaccuracies and tolerances. As a consequence quality inspection of automotive interior design parts on a statistical basis is a requirement for safety reasons. Performance and documentation of such quality inspections is also a regulatory requirement under many jurisdictions.

The present invention facilitates to perform such quality inspections with a high degree of precision and in a consistent and automated way. For quality inspection, a sample is cut from the automotive interior design part. The cut for cutting the sample from the automotive interior design part can be performed in a direction longitudinal to the weakening line or in a direction that is transversal to the weakening line.

An image is acquired from the resultant cut edge that comprises a portion of the weakening line to be inspected. By means of image processing a quality measure is automatically determined from the image data. For example, the quality measure is the remaining wall thickness under the weakening line. Additionally, the distance of neighboring micro-perforations, and/or the density of material imperfections, such as gas enclosures and the like, or other distances or parameters that are related to the quality of the part may be used.

In accordance with an embodiment of the invention the image acquisition is performed using a charge coupled device (CCD) camera and an optical system. Preferably, a high resolution black and white CCD camera is utilized.

In accordance with the invention an exterior delimitation and an interior delimitation of the cut edge profile is detected by means of the image processing. Local minima, or in general, other distances or parameters, between the exterior and the interior delimitations are determined. On this basis a quality measure is calculated, by averaging the local minima.

In addition distances between two consecutive blind holes are calculated using the image data. The quality measure can be calculated by calculating an average of the distances within a certain moving average window.

In accordance with a further embodiment other material imperfections are identified using the image data, such as gas enclosures. The quality measure can be calculated by calculating the surface density of the detected gas enclosures, if any.

In accordance with an embodiment of the invention a representation of the exterior delimitation and/or the interior delimitation is superimposed on the image data. The image data with the superimposed representations and/or the quality measure that has been obtained from the image data is stored in a database for the purpose of documentation of the quality inspection, that could be afterwards statistically treated, with the final purpose to improve the control of the pre-weakening process and thus the control of the resultant parts. Alternatively or in addition the image data with the superimposed representations is displayed on a computer monitor.

### Brief description of the drawings

In the following preferred embodiments of the invention will be described by way of example only making reference to the drawings in which:
- Figure 1: shows a block diagram of an embodiment of an apparatus,
- Figure 2: shows a schematic rear view of an automotive interior design part having a pre-weakening line,
- Figure 3: shows an image acquired from a cut edge of an automotive interior design part having a pre-weakening line that has been fabricated by means of hot knives,
- Figure 4: schematically shows the exterior and interior delimitations detected by means of image processing in the cut edge image data of fig. 3,
- Figure 5: shows image data acquired from the cut edge of an automotive interior design part having a micro-perforated pre-weakening line and the superimposed representations of the detected exterior and interior delimitations,
- Figure 6: is a schematic diagram showing the detected exterior and interior delimitations in the image data of fig. 5,
- Figure 7: shows the diagram of fig. 6 after the local minima of the wall thicknesses and the distances between neighboring micro-perforations have been determined for calculation of respective quality measures,
- Figure 8: shows an image that has been acquired from a cut edge being cut in a direction transversal to the pre-weakening line of the automotive interior design part,
- Figure 9: is a flow diagram illustrating a method of the invention,
- Figure 10: is a cut edge of a part that has been preweakend with a flat blade.

### Detailed description

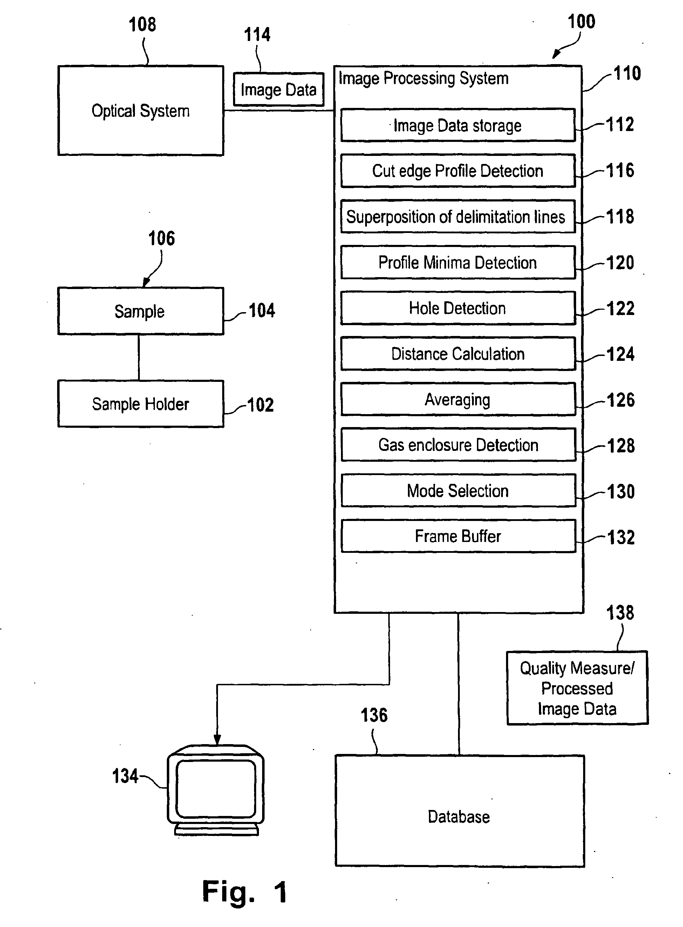

Fig. 1 shows an apparatus 100 for quality inspection of an automotive interior design part that has a pre-weakening line. The apparatus 100 has a mechanical sample holder 102 for holding a sample 104 of the automotive interior design part in a defined position. The sample 104 has a cut edge 106 that is obtained by cutting the sample 104 off the automotive interior design part in a direction longitudinal or transversal to the pre-weakening line.

The apparatus 100 has an optical system 108 for acquiring image data from the cut edge 106. Preferably, the optical system 108 comprises a high resolution black and white CCD camera. The CCD camera can be coupled to a lenses system.

The optical system 108 is coupled to an image processing system 110. The image processing system 110 has a storage 112 for storing the image data 114 received from the optical system 108.

Further, the image processing system 110 has a program component 116 for detecting a profile of the cut edge 106 in the image data 114. The profile detection can be performed by detection of an exterior delimitation of the cut edge 106, i.e. the delimitation of the cut edge 106 that is located on the outer surface of the automotive interior design part that is visible from the inside of the passenger compartment when the automotive interior design part is installed in the vehicle, and by detection of an interior delimitation, e.g. the delimitation of the cut edge at the backside of the automotive interior design part.

The image processing system 110 has a program component 118 for superposition of the exterior and/or interior delimitation lines determined by means of the program component 116 onto the image data stored in the storage 112.

A program component 120 serves for detection of profile minima, i.e. minimum distances between the exterior and interior delimitation lines corresponding to minima of the remaining wall thickness. A program component 122 serves for detection of hole locations, if the automotive interior design part to be inspected has a pre-weakening line consisting of micro-perforations.

The program component 124 serves for distance calculation, e.g. for calculation of the distances between the exterior and interior delimitations and/or for calculation of the hole distances.

A program component 126 serves for averaging the distances calculated by the program component 124, such as by the moving average calculation.

Program component 128 serves for detection of gas enclosures that are detectable in the image data stored in the storage 112, if any, and for calculation of a respective quality measure, such as the mean density of such detected gas enclosures.

A program component 130 serves for a user's mode selection of a processing mode of the image processing system 100. For example, the image processing system 100 has a processing mode for each type of pre-weakening technique supported by the image processing system 100, such as pre-weakening by cold or hot knives, or ultrasonic knives, and laser micro-perforation, or other pre-weakening methods. Alternatively no such mode selection is necessary if the image processing methods implemented by the program components 116 to 128 are sufficiently robust to work with various types of image data acquired from samples that have been pre-weakened by means of different methods and/or geometries, and raw materials used for the product.

The image processing system 110 has a frame buffer 132 for storing the image data 114 and the superimposed representations of the exterior and/or interior delimitation lines for display on a monitor 134. Further, the image processing system 100 is coupled to a database 136 for storing a quality measure and/or the processed image data for a given sample 104.

In operation the specimen of an automotive interior design part is removed from the running production to be quality inspected. For example, one in one thousand automotive interior design parts is removed from the running production for destructive quality inspection in accordance with the embodiments considered here, or one per production shift, or per production batch.

The sample 104 is cut off the automotive interior design part by cutting the automotive interior design part in a direction longitudinal or transversal to its pre-weakening line.

The resultant sample 104 is placed in the sample holder 102 with its cut edge 106 facing the optical system 108.

The optical system 108 takes a picture of the cut edge 106 and the resultant image data 114 is transmitted from the optical system 108 to the image processing system 100. The image data 114 is stored in the storage 112 of the image processing system 100 for further processing.

The program component 116 determines the cut edge profile of the cut edge 106 using the image data stored in the storage 112, such as by detecting the exterior and interior delimitations of the cut edge profile. The corresponding delimitation lines that are representations of these detected exterior and interior delimitations are superimposed on the image data and the image data with the superimposed delimitation lines is transferred to frame buffer 132 for display on the monitor 134.

Program module 120 detects the local minima in the cut edge profile and the respective distances between the exterior and interior delimitations are calculated by means of program module 124. This provides the remaining wall thicknesses at the detected minima locations. The minimum wall thicknesses are averaged by program component 126 and stored in the database 136 together with a key that uniquely identifies the sample 104.

If the sample 104 has micro-perforations, the perforation holes are detected by means of the program component 122 and the distances between two neighboring perforation holes are calculated by means of program component 124 and averaged by program component 126 in order to provide an additional or alternative quality measure that is also stored in the database 136 using the unique key of the sample 104. In addition or alternatively material imperfections that are detectable in the image data stored in the storage 112 are detected by the program component 128, such as the total number or the density of gas enclosures. The resultant quality measure is stored in the database 136 using the unique key of the sample 104.

For example, a dataset 138 containing the quality measure or the quality measures calculated by the image processing system 110 and the processed image data with the superimposed delimitation lines or a pointer to the processed image data is exported from the image processing system 110 and stored in the database 136 for later reference. The dataset 138 carries a unique identifier of the sample 104 as a database access key. In addition, the dataset 138 can contain date, time, source, etc information regarding the sample 104.

It is to be noted that the program component 126 can also be implemented in the database 136 instead of in the image processing system 110. In this instance the image processing system 110 delivers the raw measurement values to the database 136. For instance the image processing system 110 delivers the remaining wall thickness values that have been calculated from the cut edge profile at various sample points as quality measures.

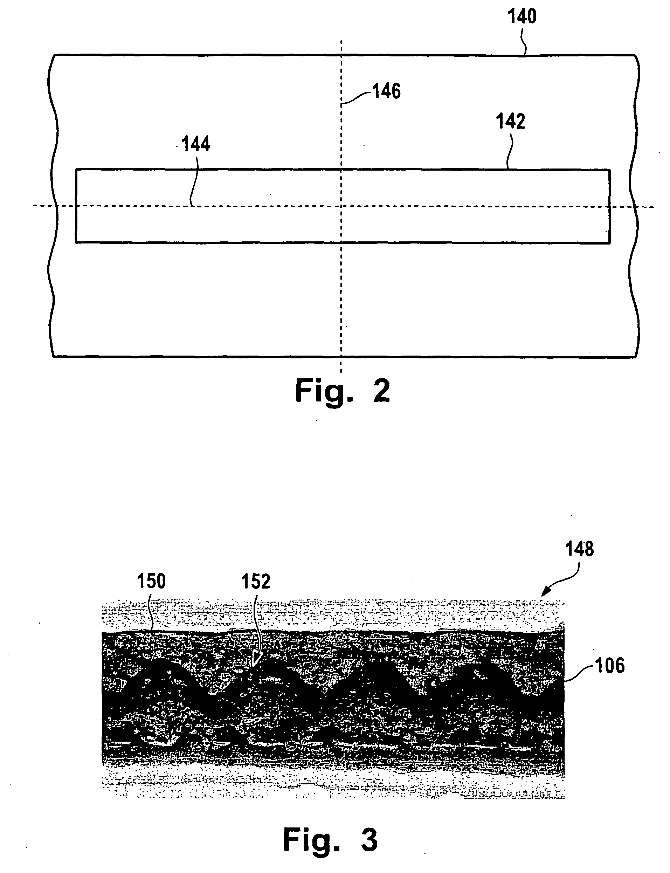

Fig. 2 shows a schematic rear view of an automotive interior design part 140. The automotive interior design part 140 has a pre-weakening line 142 that is not visible from the exterior side of the automotive interior design part 140. The sample 104 (cf. fig. 1) is cut off the automotive interior design part 140 by cutting through the automotive interior design part 140 along a cut line 144 and/or a cut line 146.

The cut line 144 is located approximately in the middle of the pre-weakening line 142 and extends in a longitudinal direction with respect to the pre-weakening 142 whereas the cut line 146 is transversal to the pre-weakening line 142.

Fig. 3 shows an example of an image 148 that has been acquired by the optical system 108 (cf. fig. 1) from a cut edge 106 of the sample 104 that has been obtained in accordance with the cutting operations illustrated in fig. 2. The image 148 shows an exterior delimitation 150 of the sample 106 and an interior delimitation 152 that has the form of a zig-zag line. Such a zig-zag line is obtained by means of a hot knives pre-weakening process. Other geometries with cold or hot knives, or with ultrasonic knives are possible to be quality inspected as well.

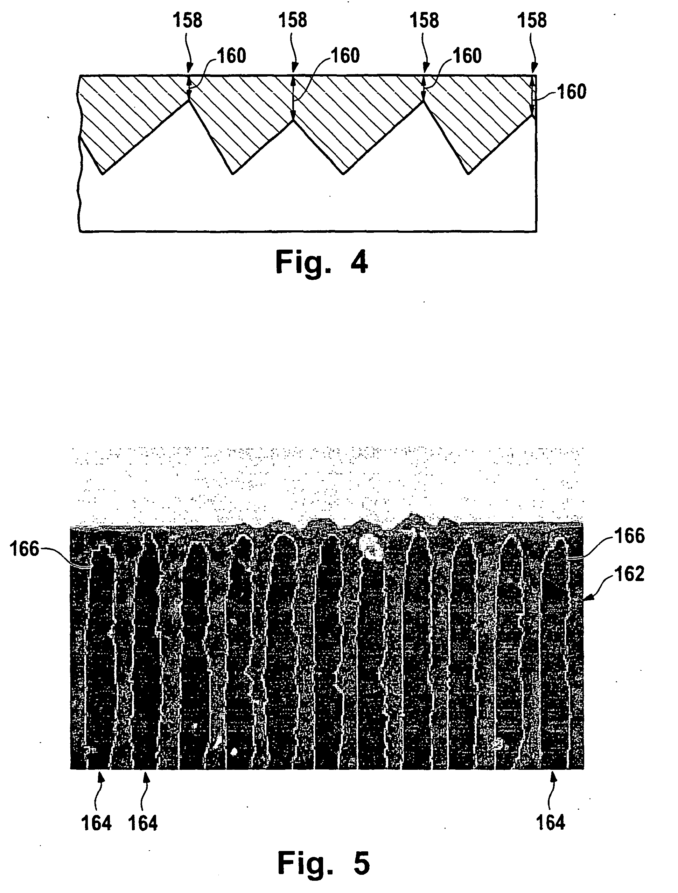

The respective image data 114 that represents the image 148 is stored in the storage 112 of the apparatus 100 (cf. fig. 1). The exterior delimitation 150 and the interior delimitation 152 are detected by the program module 116 and corresponding exterior and interior delimitation lines 154 and 156 are superimposed onto the image data as schematically depicted in fig. 4. The local minima 158 of the distances between the exterior and interior delimitation lines 154, 156 are determined by the profile minima detection component 120 and the respective distances 160 are calculated by the program component 124. The distances 116 are averaged, which provides a quality measure being representative of the remaining wall thickness under the pre-weakening line.

Fig. 5 shows an image 162 obtained from a cut edge 106 of another sample 104 that has a pre-weakening line consisting of a micro-perforation formed by a succession of blind holes 164. The image data 114 that represents the image 162 is processed by the image processing system 100. The external delimitation lines 166 shown as white lines in fig. 5 have been superimposed onto the image 162.

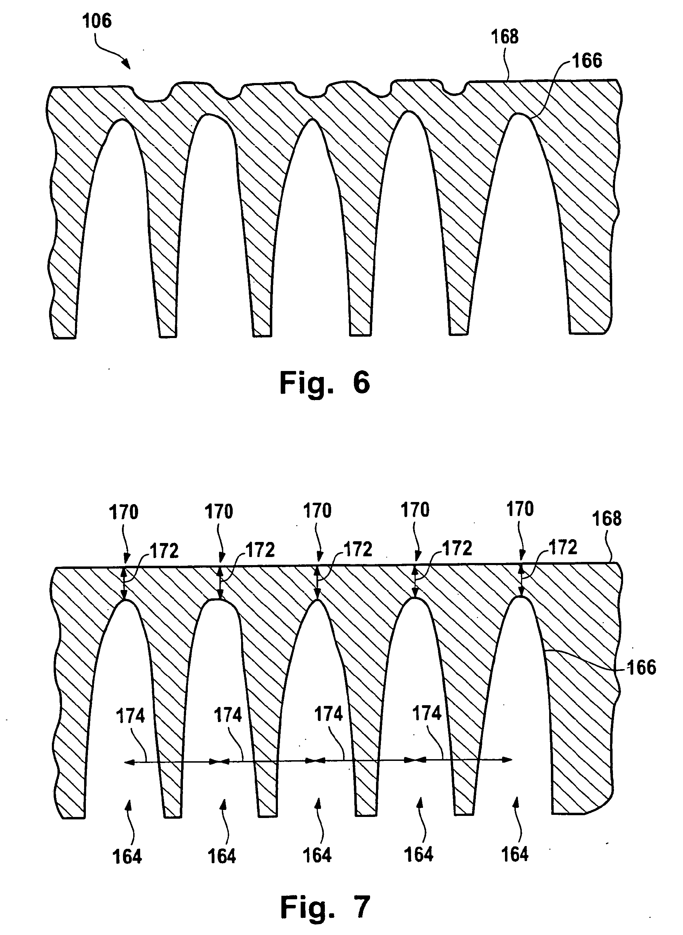

Fig. 6 schematically shows the cut edge 106 with the interior delimitation lines 166 and the exterior delimitation line 168 of the part as shown in fig. 5. The exterior delimitation line is located on the exterior surface of the part.

The detection of the interior and exterior delimitation lines 166, 168 forms the basis for detection of the local minima between the external and internal delimitation lines 168, 166 as well as for calculation of the respective distances 172. Again, the distances 172 can be averaged to provide an average of the minimum remaining wall thickness under the pre-weakening line as a quality measure.

In addition or alternatively the positions of the blind holes 164 are determined from the internal delimitation lines 166 and the distances 174 between neighboring blind holes 164 are calculated and averaged to provide another quality measure. It is to be noted however, that averaging is not essential but that also the individual distances 174 and/or 172 can be stored as quality measures.

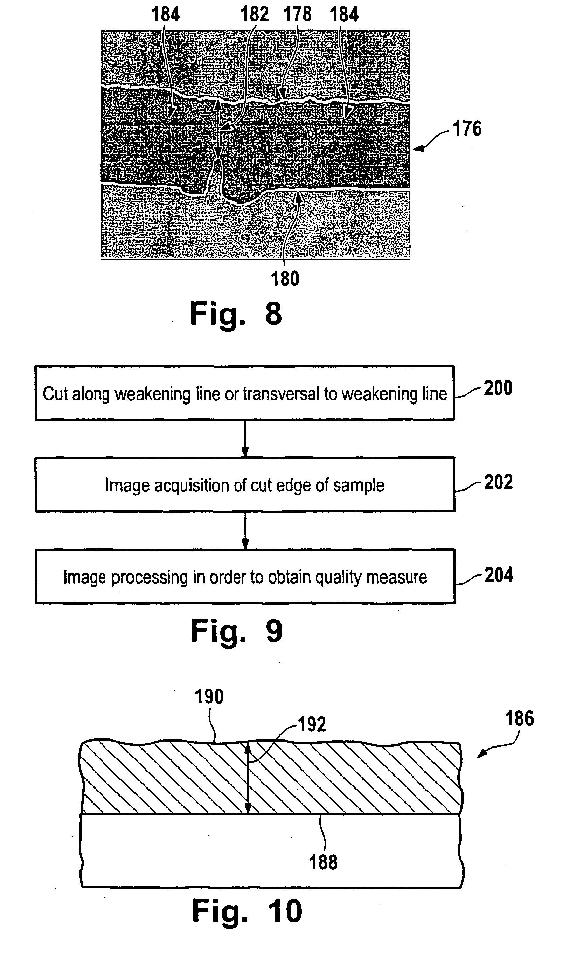

Fig. 8 shows an image 176 of a cut edge 106 that has been obtained by cutting along the transversal cut line 146. An external delimitation line 178 and an internal delimitation 180 have been added as representations of the respective external and internal delimitations. The external and internal delimitation lines 178, 180 are shown as white lines in the image 176. Detection of the absolute minimum of the distance between the exterior and interior delimitation lines 178, 180 provides the minimum remaining wall thickness 182 as a quality measure.

In addition the image 176 may show gas enclosures 184 that have been cut through on the cut edge 106. The contours of the gas enclosures 184 are also detected for calculation of a respective quality measure.

Fig. 9 shows a corresponding flowchart. In step 200 a specimen of the automotive interior design part to be inspected is cut along its weakening line or transversal to the weakening line in order to obtain a sample. In step 202 an image is acquired from the resultant cut edge of the sample using a CCD camera. In step 204 image processing is performed on the acquired image data in order to obtain one or more quality measures regarding a quality criterion to be inspected of the automotive interior design part.

Fig. 10 shows a cut edge 186 of a part that has been preweakened with a flat blade. The cut edge is obtained by cutting the part along the preweakening line, i.e. in a longitudinal direction.

In this instance the interior delimitation 188 of the cut edge profile is essentially flat. The external delimitation 190 located on the external surface of the part and the interior delimitation are detected automatically by the image processing software. The remaining wall thickness 192 is calculated from the detected external and internal delimitations 188, 190 and output as a quality measure.

Other cut edge geometries can be processed as well.

**List of Reference Numerals**

| | |
|---|---|
| 100 | Apparatus |
| 102 | Sample holder |
| 104 | Sample |
| 106 | Cut edge |
| 108 | Optical system |
| 110 | Image processing system |
| 112 | Storage |
| 114 | Image data |
| 116 | Program component |
| 118 | Program component |
| 120 | Program component |
| 122 | Program component |
| 124 | Program component |
| 126 | Program component |
| 128 | Program component |
| 130 | Program component |
| 132 | Frame buffer |
| 134 | Monitor |
| 136 | Database |
| 138 | Dataset |
| 140 | Automotive interior design part |
| 142 | weakening line |
| 144 | Longitudinal Cut line |
| 146 | Transversal Cut line |
| 148 | Image |
| 150 | Exterior delimitation |
| 152 | Interior delimitation |
| 154 | Exterior delimitation line |
| 156 | Interior delimitation line |
| 158 | Local minima |
| 160 | Distance |
| 162 | Image |
| 164 | Blind hole |
| 166 | Interior delimitation line |
| 168 | Exterior delimitation line |
| 170 | Local minima |
| 172 | Distance |
| 174 | Distance |
| 176 | Image |
| 178 | Exterior delimitation line |
| 180 | Interior delimitation line |
| 182 | Remaining wall thickness |
| 184 | Gas enclosure |
| 186 | Cut edge |
| 188 | Interior delimitation |
| 190 | Exterior delimitation |
| 192 | Wall thickness |

## Claims

1. A method of inspecting the quality of automotive interior design parts (140), the automotive interior design parts having a weakening line (142) for forming an airbag deployment opening, the method comprising:
- removing one of the automotive interior design parts from a running production for destructive quality inspection,
- cutting a sample (104) from the automotive interior design part, the sample comprising a portion of the weakening line, wherein the sample is cut such that it comprises a portion of the weakening line to be inspected resulting in a cut edge (106),
- placing the sample in a sample holder (102) with its cut edge (106) facing an optical system (108),
- acquiring image data from the cut edge (106) of the automotive interior design part by the optical system,
- processing the image data for automatic determination of a quality measure,
wherein the image processing comprises detection of an exterior delimitation (150; 168; 178) and an interior delimitation (152; 166; 180) of the cut edge profile, determination of minimum distances (160; 172) between the exterior delimitation and the interior delimitation for providing minimum remaining wall thicknesses at the detected minima locations, and calculation of the quality measure using the minimum distances by a moving average calculation (126) of the minimum remaining wall thicknesses.

2. The method of claim 1, the weakening line having a succession of blind holes (164), the image processing comprising determination of distances (174) between the blind holes and calculation of the quality measure using the distances between the blind holes.

3. The method of claim 1 or 2, the image processing comprising detecting of a material inhomogeneity of the automotive interior design part.

4. The method of claim 3, the material inhomogeneity being a gas enclosure (184).

## Patentansprüche

1. Verfahren zur Überprüfung der Qualität von Kraftfahrzeuginnendesignteilen (140), wobei die Kraftfahrzeuginnendesignteile eine Schwächungslinie (142) aufweisen zur Bildung einer Airbag-Entfaltungsöffnung, wobei das Verfahren umfasst:
- Entfernen eines der Kraftfahrzeuginnendesignteile aus einer laufenden Produktion zur zerstörenden Qualitätsüberprüfung,
- Herausschneiden einer Probe (104) aus dem Kraftfahrzeuginnendesignteil, wobei die Probe einen Teil der Schwächungslinie umfasst, wobei die Probe so herausgeschnitten wird, dass sie resultierend einen Teil der zu überprüfenden Schwächungslinie als Schnittkante (106) aufweist,
- Einsetzen der Probe in einen Probenhalter (102) mit ihrer Schnittkante (106) zu einem optischen System (108) zugewandt,
- Aufnahme von Bilddaten der Schnittkante (106) des Kraftfahrzeuginnendesignteils durch das optische System,
- Verarbeitung der Bilddaten zur automatischen Bestimmung eines Qualitätsmaß,
wobei die Bildverarbeitung die Detektion einer äußeren Abgrenzung (150; 168; 170) und einer inneren Abgrenzung (152; 166; 180) des Schnittkantenprofils, die Bestimmung von minimalen Abständen (160; 172) zwischen der äußeren Abgrenzung und der inneren Abgrenzung zur Bereitstellung einer minimal übrigbleibenden Wandstärke an den detektierten Minimaorten, und Berechnung des Qualitätsmaß unter Verwendung der minimalen Abstände durch eine gleitende Mittelwertberechnung (126) der minimal übrigbleibenden Wandstärke umfasst.

2. Verfahren nach Anspruch 1, wobei die Schwächungslinie eine Aufeinanderfolge von Sacklöchern (164) aufweist, wobei die Bildverarbeitung eine Bestimmung von Abständen (174) zwischen den Sacklöchern und eine Berechnung des Qualitätsmaßes unter Verwendung der Abstände zwischen den Sacklöchern umfasst.

3. Verfahren nach Anspruch 1 oder 2, wobei die Bildverarbeitung des Weiteren eine Detektion einer Materialinhomogenität des Kraftfahrzeuginnendesignteils umfasst.

4. Verfahren nach Anspruch 3, wobei es sich bei der Materialinhomogenität um einen Gaseinschluss (184) handelt.

## Revendications

1. Procédé d'inspection de la qualité de pièces d'habillage intérieur automobiles (140), les pièces d'habillage intérieur automobiles ayant une ligne de faible résistance (142) pour former une ouverture de déploiement d'airbag, le procédé comprenant :
- retirer l'une des pièces d'habillage intérieur automobiles d'une production en cours pour une inspection de la qualité destructive,
- découper un échantillon (104) de la pièce d'habillage intérieur automobile, l'échantillon comprenant une portion de la ligne de faible résistance, l'échantillon étant découpé de telle sorte qu'il comprenne une portion de la ligne de faible résistance à inspecter résultant en un bord tranché (106),
- placer l'échantillon dans un support d'échantillon (102), son bord tranché (106) faisant face à un système optique (108),
- acquérir des données image du bord tranché (106) de la pièce d'habillage intérieur automobile par le système optique,
- traiter les données image pour déterminer automatiquement une mesure qualité,
dans lequel le traitement d'image comprend la détection d'une délimitation extérieure (150 ; 168 ; 178) et d'une délimitation intérieure (152 ; 166 ; 180) du profil de bord tranché, la détermination de distances minimum (160 ; 172) entre la délimitation extérieure et la délimitation intérieure pour fournir des épaisseurs de paroi restantes minimum au niveau des emplacements minimum détectés, et le calcul de la mesure qualité en utilisant les distances minimum par un calcul de moyenne mobile (126) des épaisseurs de paroi restantes minimum.

2. Procédé de la revendication 1, la ligne de faible résistance ayant une succession de trous borgnes (164), le traitement d'image comprenant la détermination de distances (174) entre les trous borgnes et le calcul de la mesure qualité en utilisant les distances entre les trous borgnes.

3. Procédé de la revendication 1 ou 2, le traitement d'image comprenant la détection d'une inhomogénéité de matériau de la pièce d'habillage intérieur automobile.

4. Procédé de la revendication 3, l'inhomogénéité de matériau étant une enceinte de gaz (184).
